Europäisches Patentamt

European Patent Office

Office européen des brevets

(19)

(11) Numéro de publication: **0 051 241**
**B1**

(12) **FASCICULE DE BREVET EUROPEEN**

(45) Date de publication du fascicule du brevet: 04.12.85

(51) Int. Cl.⁴: **B 23 P 19/00**

(21) Numéro de dépôt: **81108922.6**

(22) Date de dépôt: **26.10.81**

(54) **Procédé et dispositif de manutention de pièces allongées de grandes dimensions.**

(30) Priorité: **27.10.80 FR 8022964**

(43) Date de publication de la demande:
**12.05.82 Bulletin 82/19**

(45) Mention de la délivrance du brevet:
**04.12.85 Bulletin 85/49**

(84) Etats contractants désignés:
**AT BE CH DE GB IT LI NL SE**

(56) Documents cités:
**EP-A-0 003 326**
**EP-A-0 009 750**
**FR-A-2 234 637**
**FR-A-2 394 374**
**US-A-3 179 569**

(73) Titulaire: **SKF COMPAGNIE D'APPLICATIONS
MECANIQUES & CIE faisant commerce sous le
nom de COMPAGNIE DES ACIERS,
OUTILLAGES ET
EQUIPEMENTS INDUSTRIELS 1, avenue Newton
F-92142 Clamart (FR)**

(73) Titulaire: **ETAT-FRANCAIS représenté par le
DELEGUE GENERAL POUR L'ARMEMENT
Bureau des Brevets et Inventions de la
Délégation Générale pour l'Armement 14, rue
Saint-Dominique
F-75997 Paris Armées (FR)**

(72) Inventeur: **Gibert, Pierre
46, Boulevard de la Gespe
F-65000 Tarbes (FR)**
Inventeur: **Tajan, Jacques
Lotissement du Marboré
F-65600 Semeac (FR)**

(74) Mandataire: **Casalonga, Alain et al
BUREAU D.A. CASALONGA OFFICE JOSSE &
PETIT Baaderstrasse 12-14
D-8000 München 5 (DE)**

Courier Press, Leamington Spa, England.

# Description

La présente invention concerne la manutention de pièces allongées de grandes dimensions et en particulier de goujons utilisés pour la fixation des couvercles de cuve de réacteurs nucléaires.

On sait que les réacteurs de centrales nucléaires comportent généralement une cuve de pression enfermant le combustible et fermée par un couvercle rendu solidaire de la cuve au moyen d'un ensemble de goujons disposés à sa périphérie. Ces goujons, de grandes dimensions et d'un poids important, doivent pouvoir être montés et démontés lors de l'ouverture du couvercle de la cuve. On a déjà décrit, notamment dans la demande de brevet européen n°000 9750 un dispositif automatique permettant le vissage et le dévissage de goujons de ce type de manière automatique.

Par ailleurs on connaît (FR—A—2 394 374) un dispositif de positionnement d'un organe sur une plaque tubulaire à travers un trou d'homme dont l'axe fait un angle avec les tubes, dans lequel un équipement de transport comprend une perche pivotante et un chariot porteur mobile le long de la perche sous l'action d'une chaîne.

La présente invention a pour objet de simplifier la manutention des goujons après leur dévissage lors de l'ouverture du couvercle de la cuve ou avant leur vissage lors de la fermeture du couvercle de cuve de façon à limiter la manipulation des goujons par le personnel des centrales nuclèaires.

La présente invention a donc pour objet de permettre la manutention des goujons depuis un anneau de support faisant partie du dispositif automatique de vissage et de dévissage jusqu'à un conteneur où les goujons peuvent être convenablement stockés et réciproquement depuis de conteneur jusqu'à la pièce annulaire de la machine automatique de vissage et de dévissage reposant sur un stand support.

Le dispositif de manutention de goujons selon l'invention permet le déplacement verticale du goujon et son pivotement jusqu'en position horizontale et vice versa. Selon l'invention, le dispositif de manutention comprend un bras pivotant susceptible de basculer autour d'un axe fixe situé au voisinage de l'extrémité inférieure du bras et servant de guidage à un chariot mobile susceptible de se déplacer le long dudit bras et muni de moyens de support pour la portion inférieure du goujon. Au moins un câble comporte une extrémité fixée au chariot mobile son autre extrémité coopérant avec une treuil fixe. Le câble, de préférence unique, passe par au moins un organe fixe et en outre sur une poulie folle montée sur le bras au-dessus de l'axe fixe. Le poids du chariot mobile est choisi de façon que l'effort sur la poulie folle solidaire du bras pivotant reste suffisant pour amener le bras en position verticale et le maintenir dans cette position. De cette manière il est possible, en actionnant le treuil et en agissant simplement sur ce câble, d'obtenir à la fois le déplacement vertical du goujon et son pivotement jusqu'en position horizontale et vice versa.

Le dispositif de manutention de l'invention comprend en outre des moyens de réception pour le goujon, pouvant être accrochés de manière amovible sur le bras pivotant et destinés à protéger le goujon pendant son transport ultérieur.

L'extrémité du câble fixée au chariot se trouve sensiblement dans l'axe du déplacement vertical du chariot c'est-à-dire dans l'axe du bras pivotant. Le câble passe ensuite sur un ensemble de poulies fixes avant de passer sur la poulie folle solidaire du bras pivotant. Cette poulie folle est montée sur la paroi latérale du bras pivotant. De cette manière, le câble se trouve donc décalé jusque dans le plan de la poulie folle solidaire du bras pivotant.

Il est possible dans une variante et afin d'éviter tout risque de torsion du bras pivotant sous l'action du câble coopérant avec la poulie folle latérale, de prévoir un deuxième câble coopérant avec une deuxième poulie folle solidaire de l'aure face latérale du bras pivotant.

Le bras pivotant comprend de préférence une structure allongée munie de pistes de guidage pour le chariot mobile prévues à l'intérieur de ladite structure. Des butées sont avantageusement prévues pour limiter le déplacement du chariot à l'intérieure de la structure du bras pivotant.

Dans un mode de réalisation préféré, le dispositif comprend en outre un rail de guidage de sécurité, solidaire du bâti et dont l'extrémité inférieure est ouverte. Ce rail est capable de coopérer avec un élément solidaire du chariot mobile, sur la majeure partie du déplacement du chariot à l'intérieur du bras de pivotement lorsque ledit bras de pivotement est en position verticale. Lors du déplacement vertical du goujon supporté par le chariot mobile, le bras pivotant se trouve ainsi verrouillé en position verticale pendant la majeure partie du trajet du chariot mobile évitant ainsi tout risque de basculement inopiné. Au contraire, lors du pivotement en position horizontale, le chariot mobile se trouve libéré du rail de guidage compte tenu de l'existence de son extrémité inférieure ouverte autorisant ainsi le basculement du bras pivotant autour de son axe.

Les moyens de réception du goujon comprennent de préférence un étui de protection muni de supports en forme de berceau sur lesquels peut reposer le goujon en position horizontale. L'étui de protection comporte en outre un fond ajouré autorisant le passage des moyens de support solidaires du chariot mobile mais ne permettant pas le passage de la partie inférieure du goujon qui se trouve ainsi convenablement positionné lorsque sa face inférieure vient en contact avec le fond de l'étui de protection.

L'étui de protection présente avantageusement un profil en U, ouvert, sur sa face en regard du bras pivotant. Il est ainsi possible lors d'un mouvement de basculement du bras pivotant équipé d'un étui de protection, de venir entourer un goujon devant être retiré de l'anneau d'une machine automatique de vissage et de dévissage.

La face extérieur du fond de l'étui comporte avantageusement des moyens de support et de blocage qui coopèrent avec des pattes solidaires du bras pivotant. Des moyens de verrouillage sont en outre prévus sur les parois latérales de l'étui et coopèrent avec des crochets montés sur le bras pivotant. Il est ainsi possible d'accrocher manuellement un étui de protection sur le bras pivotant et de maintenir ces deux éléments solidaires l'un de l'autre pendant le basculement du bras de pivotement et le déplacement du chariot mobile par rapport au bras pivotant.

L'ensemble du dispositif de manutention de goujons de l'invention peut de préférence se déplacer le long d'au moins un rail de guidage de façon à recevoir successivement les différents goujons suspendus à l'anneau d'une machine automatique de vissage et de dévissage placé sur un stand de support.

Le présente invention a également pour objet un procédé de manutention de goujons consistant à utiliser pour chaque goujon un étui de réception protecteur dont le fond peut supporter le goujon en position verticale puis à faire subir au goujon lors d'une opération de dépose, un mouvement de descente verticale à l'intérieur de cet étui et enfin à procéder à un mouvement de pivotement de l'étui de réception comportant le goujon dont la face inférieure est en contact avec le fond de l'étui. Lors d'une opération de reprise d'un tel goujon, le mouvement de pivotement précéde un mouvement de remontée verticale du goujon à l'intérieur de son étui de protection.

Dans un mode de réalisation préféré d'un tel procédé de manutention selon l'invention, un câble unique de commande est utilisé pour la réalisation des deux mouvements successifs.

L'invention sera mieux comprise à l'étude de la description détaillée d'un mode de réalisation pris à titre d'exemple nullement limitatif et illustrée par les dessins annexés, sur lesquels:

la fig. 1 est une vue schématique de côté en coupe axiale d'un dispositif de manutention selon l'invention montrant la première étape d'une opération de dépose d'un goujon, le chariot mobile étant en position haute;

la fig. 2 est une vue analogue montrant une étape ultérieure, le chariot mobile étant en position basse, le bras pivotant restant cependant en position verticale;

la fig. 3 est une vue analogue montrant la dernière étape après le basculement du bras pivotant; et

la fig. 4 est une vue partielle agrandie de devant dans laquelle on a omis l'étui protecteur afin de montrer le trajet du câble de commande.

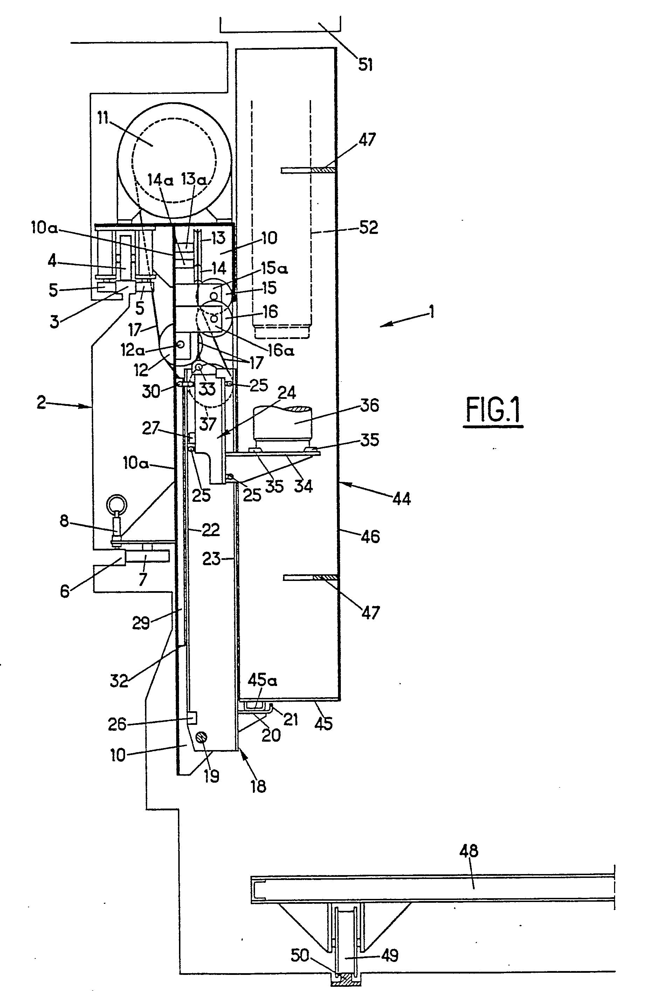

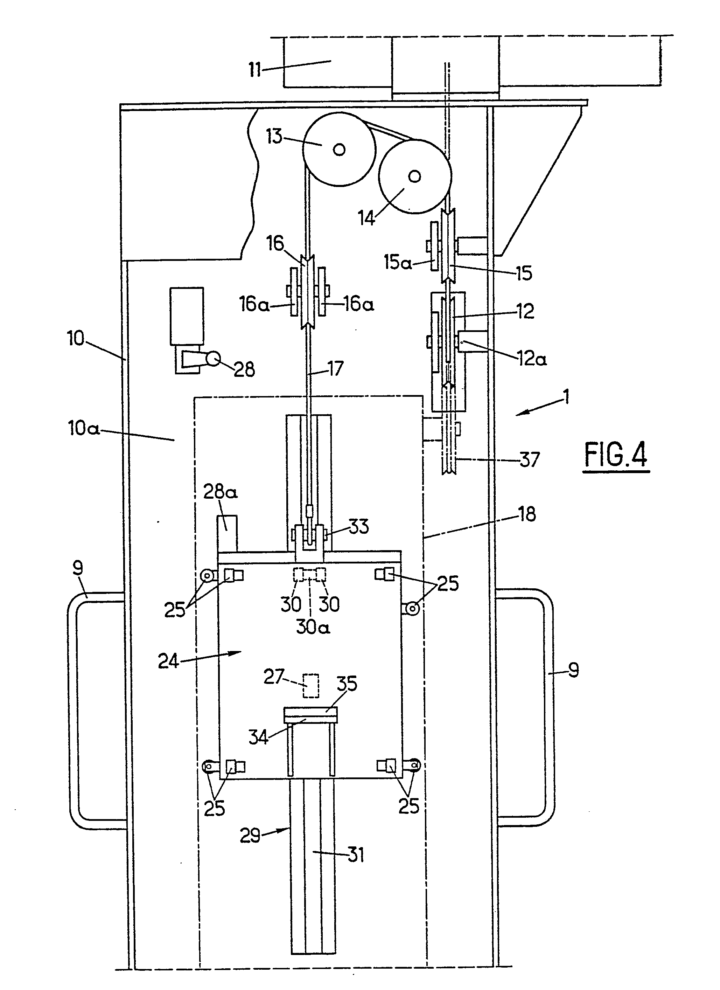

Tel qu'il est représenté sur les figures, le dispositif de manutention de goujons est analoque à une nacelle référencée 1 dans son ensemble et peut se déplacer autour d'un stand de support 2 dont le profil est schématiquement représenté sur les figs. 1 à 3. Le stand de support 2 est équipé d'un rail circulaire supérieur 3 sur lequel roulent un galet supérieur 4 solidaire de la nacelle 1 et deux galets de maintien latéral 5 également solidaires de la nacelle. Le stand de support 2 comporte en outre un rail inférieur circulaire 6 sur la périphérie duquel vient rouler un galet 7 à axe vertical solidaire du bâti de la nacelle 1. Le rail inférieur 6 comporte des trous d'indexage qui peuvent coopérer avec un doigt de blocage 8 à actionnement manuel, solidaire du bâti de la nacelle 1 de façon à placer la nacelle en position convenable pour la dépose ou la reprise d'un goujon. Le déplacement de l'ensemble de la nacelle 1 se fait manuellement en s'aidant par exemple des poignées 9 visibles sur la fig. 4.

La nacelle 1 est composée d'une structure en U référencée 10 dans son ensemble, à la partie supérieure de laquelle est fixé un treuil électrique 11. La structure en U 10 comprend également sur une de ses faces latérales une poulie 12 dont l'axe 12a est dans la direction circonférentielle de déplacement de la nacelle 1 et qui fait partiellement saillie vers l'intérieur à travers la paroi de fond verticale 10a de la structure 10 de façon à permettre au câble de commande de traverser. Deux poulies 13 et 14 sont montées sur la paroi de fond 10a à un certain écartement de cette paroi sur des axes 13a, 14a radiaux par rapport au mouvement de déplacement d'ensemble de la nacelle 1. La poulie 13 est placée légèrement au-dessus de la poulie 14 comme on peut le voir notamment sur la fig. 4. Enfin, deux poulies 15 et 16 sont montées par des flasques 15a, 16a solidaires de la paroi de fond 10a sur des axes parallèles à la direction circonférentielle de déplacement de la nacelle 1 c'est-à-dire parallèles à l'axe 12a de la poulie 12. Le plan de la poulie 15 contient également la poulie 12. Finalement, on voit que les poulies 12, 15 et 16 sont toutes dans un plan radial par rapport au déplacement de la nacelle 1 tandis que les poulies 13 et 14 sont dans un plan perpendiculaire.

L'ensemble des poulies 12, 13, 14, 15 et 16 permet de réaliser comme on le verra un trajet particulier pour le câble de commande 17 dont l'une des extrémités vient s'enrouler sur le treuil électrique 11 après avoir traversé sur la poulie 12 la paroi de fond 10a.

Un bras pivotant 18 peut basculer autour d'un axe 19 solidaire de la structure 10 de la nacelle 1 situé au voisinage de sa partie basse. Le bras basculant 18 est constitué principalement de deux profilés allongés en U assemblés à leurs extrémités. Il comporte au voisinage de sa base deux supports 20 à extrémité 21 recourbée. Les surfaces intérieures des profilés en U constituant le bras pivotant 18 sont usinées de façon à former des pistes de guidage 22, 23 pour un chariot mobile 24 qui comporte une pluralité de galets 25 coopérant avec les pistes de guidage 22 et 23. Une butée inférieure 26 solidaire du bras pivotant 18 coopère avec un organe 27 solidaire du chariot afin de définir la position basse de ce dernier. Un contact 28 solidaire de la paroi 10a de la structure 10 de la nacelle 1 coopère avec une butée 28a pour détecter la position supérieure du chariot 24.

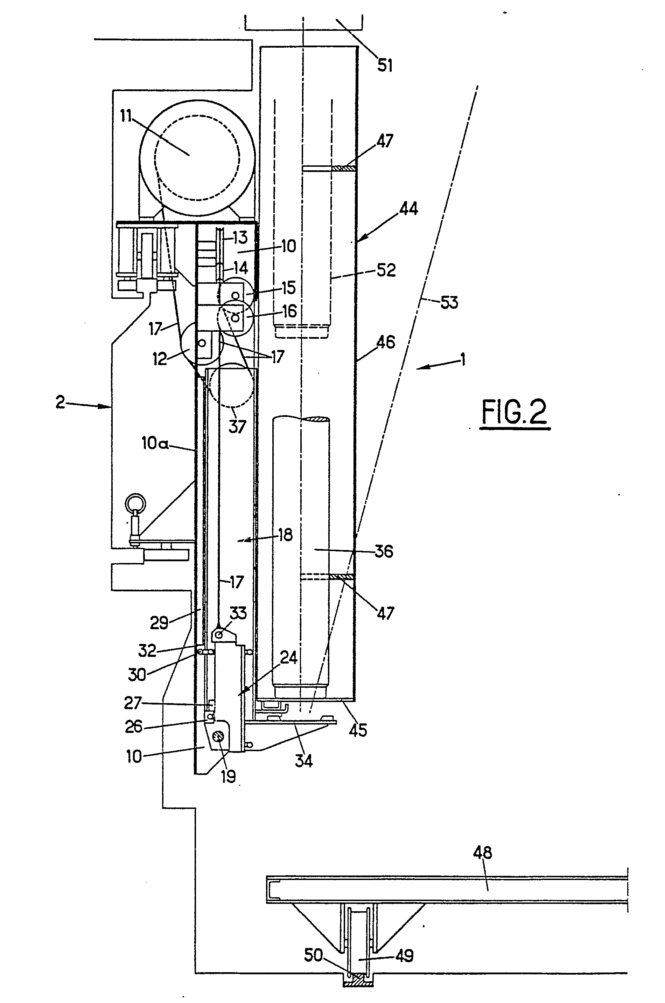

Par ailleurs, un rail vertical de guidage de sécurité 29 ayant un profil en C solidaire de la paroi 10a coopère avec des galets 30 du chariot mobile 24 de façon à guider celui-ci sur la majeure partie de son trajet vertical. A cet effet, les galets 30 sont disposés aux deux extrémités d'un petit axe 30a monté sur un excroissance solidaire du chariot 24 et qui peut traverser la fente 31 du rail de guidage 29 (voir fig. 4). L'extrémité inférieure 32 du rail de guidage 29 est ouverte de façon qu'en position basse, comme représenté sur la fig. 2 les galets 30 du chariot mobile 24 soient sortis du rail de guidage 29.

Le chariot mobile 24 comporte à sa partie supérieure un axe 33 permettant la fixation de l'extrémité du câble 17. Le chariot 24 comporte en outre des moyens de support constitués par une plaque 34 munie de cales de centrage 35 pouvant recevoir l'extrémité inférieure d'un goujon 36. On notera que la plaque 34 fait saillie à l'extérieur du bras pivotant 18 en passant entre les deux profilés en U qui le constituent.

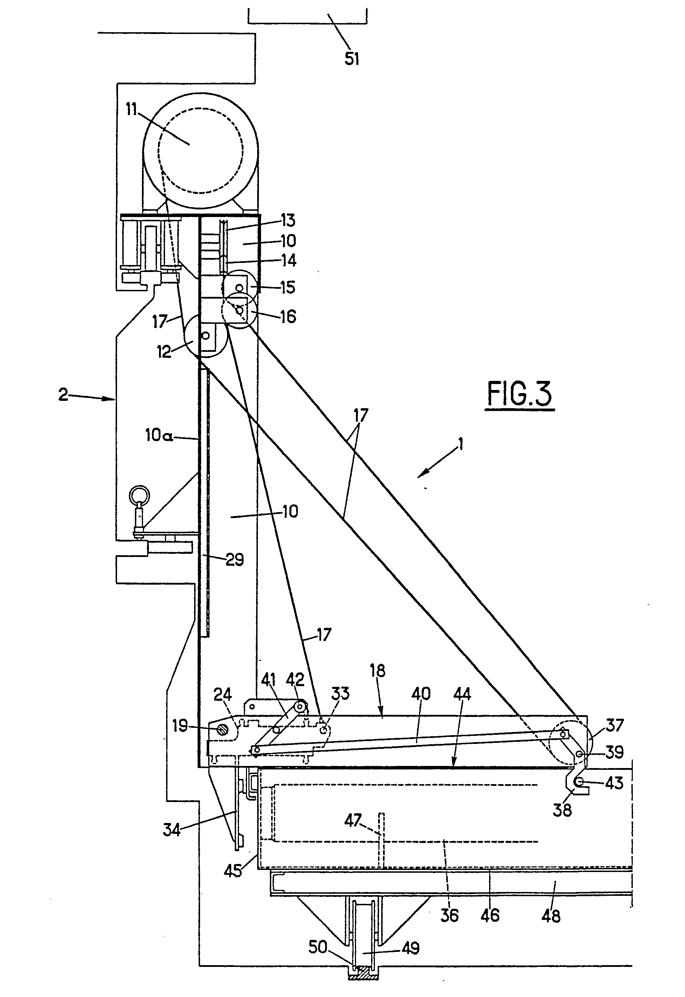

Une poulie folle 37 est montée sur l'une des faces latérales du bras pivotant 18 à sa partie supérieure dans le même plan que les poulies 12 et 15 solidaires de la structure 10. Par ailleurs, le bras pivotant 18 comporte sur chacune de ses faces latérales un crochet 38 visible sur la fig. 3 placé à sa partie supérieure et pouvant pivoter autour d'un axe fixe 39. Le pivotement du crochet 38 est commandé par une tringle 40 et un levier pivotant 41 comportant une poignée d'actionnement manuel 42 placée au voisinage de la partie basse du bras pivotant 18.

Les deux crochets 38 coopèrant avec des tétons 43 solidaires des deux faces latérales d'un étui de protection 44 destiné à recevoir un goujon 36. L'étui 44 présente un profil en U ouvert dont l'ouverture est dirigée vers l'intérieur par rapport à la nacelle 1. La paroi de fond 45 de l'étui de protection 44 est ajouré de façon à permettre le passage de la plaque de support 34 solidaire du chariot mobile 24 à travers le fond 45. Par contre, le fond 45 de l'étui 44 ne permet pas le passage de l'extrémité inférieure du goujon 36 qui se trouve donc retenu par le fond 45.

Le même fond 45 comporte sur sa face extérieure deux bossages en U 45a qui viennent coopérer avec les supports 20 du bras pivotant 18, tout écartement de la partie basse de l'étui 44 étant empêché par les extrémités recourbées 21 des supports 20.

La face 46 de l'étui 44 qui se trouve à l'extérieur lorsque l'étui est dans la position représentée sur les fig. 1 et 2 et qui en constitue le fond lorsqu'il est en position horizontale comme représenté sur la fig. 3 est équipé à l'intérieur de l'étui de berceaux 47 supportant le goujon 36 lorsqu'il est en position horizontale de façon à éviter tout contact de ses portions filetées avec les parois de l'étui, contact qui pourrait détériorer ces filetages.

L'installation se complète par un chariot 48 de transport des étuis 44, pouvant se déplacer au moyen de galets 49 sur des rails horizontaux 50 solidaires du plancher de l'installation.

On notera en examinant les figures et notamment les fig. 3 et 4, que le câble de commande 17 fixé à l'une de ses extrémités sur l'axe 33 du chariot mobile 24, passe sur la poulie 16 montée sensiblement dans le plan axial du bras pivotant 18 et qui permet de maintenir vertical le trajet ultérieur du câble 17. Le câble 17 passe ensuite sur les deux poulies 13 et 14 qui permettent de décaler le trajet depuis de plan axial du bras 18 jusqu'au plan contenant la poulie 37. A la sortie de la poulie 14, le câble 17 ainsi décalé passe sur la poulie 15 solidaire de la structure en U 10 puis sur la poulie folle 37 montée sur la face latérale du bras pivotant 18. Le câble revient ensuite passer sur la poulie fixe 12 et traverse la paroi 10a avant de s'enrouler par l'intérieur sur le treuil électrique 11.

On va maintenant décrire en s'aidant des figures le fonctionnement du dispositif de manutention de l'invention lors d'une opération de dépose d'un goujon.

En se référant tout d'abord aux fig. 1 et 2 sur lesquelles on voit très schématiquement la partie basse de la machine automatique de vissage et de dévissage 51, tous les goujons 36 se trouvent suspendus par leur partie supérieure filetée sur le stand support 2. Les goujons occupent alors la position 52 représentée en tirets sur les fig. 1 et 2. Le chariot mobile 24 est en position basse, l'organe 27 étant sur la butée 26. Le bras basculant 18 équipé d'un étui de protection 44 est légèrement incliné vers l'extérieur comme représenté par l'axe incliné 53 visible sur la fig. 2. On notera que cette inclinaison est possible grâce au fait que le chariot mobile 24 est en position basse de sorte que les galets 30 sont dégagés du rail de guidage 29. Cette inclinaison permet de déplacer la nacelle 1 à la main en s'aidant des poignées 9 jusqu'à ce que l'ouverture interne du profil en U de l'étui de protection 44 se trouve exactement en face du premier goujon 36 cette position étant repérée par un trou d'indexage du rail inférieur 6. Après une légère traction sur le câble 17 au moyen du treuil électrique 11 le bras basculant 18 et l'étui 44 qui en est solidaire reprennent la position verticale représentée sur la fig. 1 On poursuit la traction sur le câble 17 en actionnant le treuil électrique 11. La poulie folle 37 solidaire du bras basculant 18 restant alors fixe, cette traction provoque la remontée du chariot mobile 4 à l'intérieur du bras basculant 18. On notera que les galets 30 pénètrent alors à l'intérieur du rail de guidage 29 ce qui évite tout pivotement du bras basculant 18 à partir de sa position verticale. Avant que ce blocage ne soit effectué, il est cependant possible d'amener le bras basculant 18 en position verticale à condition de choisir convenablement le poids du chariot mobile de façon qu'une traction sur le câble 17 provoque effectivement le retour en position verticale du bras basculant 18 sans que le chariot mobile 24 ne se déplace. On notera que dans la position représentée à la fig. 3, le bras 18 étant horizontal, le chariot 24 est pratiquement bloqué en position, l'axe 33 constituant un joint fixe pour l'extrémité du cable 17. Une traction sur le câble 17 dans cette position entraîne donc un basculement vers le haut du bras 18. Au fur et à mesure de la remontée du bras 18. Le chariot 24 est soumis à un effort de plus en plus important tendant à le déplacer à l'intérieur du bras 18. Il est donc important, en particulier lorsque le bras 18 approche de la verticale, que le poids du chariot 24 soit effectivement suffisant pour éviter son déplacement.

Lorsque le chariot mobile 24 a atteint sa position haute comme représenté sur la fig. 1, le goujon 36 est descendu par le dispositif de préhension de la visseuse 51 jusqu'à ce que l'extrémité inférieure du goujon 36 vienne reposer sur la plaque 34 entre les cales 35.

La partie supérieure du goujon étant alors désolidarisée de la visseuse 51, le goujon 36 est déplacé verticalement vers le bas en même temps que le chariot mobile 24 par un simple déroulement du câble de commande 17 à partir du treuil electrique 11. Dès que la partie inférieure du goujon 36 vient en contact avec le fond 45 de l'étui 44, le goujon se trouve arrêté dans cette position comme représenté en trait plein sur la fig 2. Le fond 45 étant ajouré, le chariot mobile 25 peut cependant poursuivre son mouvement de descente jusqu'à la position basse représentée sur la fig. 2. Dans cette position, les galets de guidage 30 ayant quitté le rail 29, la poursuite du déroulement du câble de commande 17 entraîne cette fois le basculement du bras pivotant 18 autour de son axe 19 jusqu'à la position horizontale représentée à la fig. 3. Dans cette position, l'étui 44 se trouve posé sur le chariot 48, le goujon 36 étant supporté par les berceaux 47. Les crochets 38 sont actionnés de façon à être désolidarisés des tétons 43. L'étui 44 peut être déplacé avec le chariot 48. Le bras pivotant 18 peut ensuite être équipé d'un nouvel étui 44 avant de reprendre sa position initiale verticale pour procéder à la dépose du goujon suivant après une légère rotation de la nacelle 1.

Les opérations de reprise d'un goujon 36 se trouvant dans un étui 44 placé sur la chariot 48 se font par une succession d'opérations inverses.

On voit donc que l'existence d'un câble unique 17 passant sur une poulie 37 solidaire du bras pivotant 18 et dont l'une des extrémités est solidaire du chariot mobile 24 permet, grâce à la structure du dispositif de l'invention, d'obtenir au moyen du seul treuil électrique 11 les deux mouvements successifs combinés qui sont nécessaires pour déposer et reprendre les goujons 36 à savoir un déplacement vertical et un pivotement jusqu'à une position horizontale ou vice versa.

Bien que la description ait été faite en se référant plus particulièrement à la manutention de goujons de cuve de réacteur nucléaire on comprendra que l'invention pourrait également être appliquée à la manutention de toute pièce allongée de grandes dimensions que l'on désire déplacer d'une position horizontale à un position verticale et vice versa.

**Revendications**

1. Dispositif de manutention de pièces allongées de grandes dimensions telles que des goujons (36) permettant le déplacement vertical du goujon et son pivotement jusqu'en position horizontale et vice versa, caractérisé par le fait qu'il comprend un bras pivotant (18) susceptible de basculer autour d'un axe fixe (19) situé au voisinage de l'extrémité inférieure du bras et servant de guidage à un chariot mobile (24) susceptible de se déplacer le long dudit bras et muni de moyens de support (34) pour la portion inférieure du goujon (36), au moins un câble (17) dont une extrémité est fixée au chariot mobile (24) et dont l'autre extrémité coopère avec un treuil fixe (11), le câble passant par au moins un organe fixe et en outre sur une poulie folle (37) montée sur le bras (18) au-dessus de l'axe fixe précité (19) et des moyens de réception (44) du goujon (36) pouvant être accrochés de manière amovible sur le bras pivotant (18), le poids du chariot mobile (24) étant tel que l'effort sur la poulie folle (37) reste suffisant pour amener et maintenir le bras (18) en position verticale.

2. Dispositif de manutention selon la revendication 1, caractérisé par le fait que les mouvements de pivotement du bras (18) et de déplacement du chariot (24) sont coordonnés par un câble unique (17) s'enroulant sur un treuil (11).

3. Dispositif de manutention selon les revendications 1 ou 2, caractérisé par le fait que l'extrémité du câble (17) fixée au chariot mobile (24) est sensiblement dans l'axe du déplacement vertical du chariot et que le câble (17) passe ensuite sur un ensemble de poulies folles (13 à 16) avant de passer sur la poulie folle (37) solidaire du bras (18) montée sur la paroi latérale de ce dernier.

4. Dispositif de manutention selon l'une quelconque des revendications précédentes, caractérisé par le fait que le bras pivotant (18) comprend une structure allongée munie de pistes de guidage pour le chariot mobile (24) monté à l'intérieur de ladite structure, des butées étant prévues pour limiter le déplacement du chariot à l'intérieur de ladite structure.

5. Dispositif de manutention selon l'une quelconque des revendications précédentes, caractérisé par le fait qu'un rail de guidage de sécurité fixe (29) à extrémité inférieure ouverte coopère avec le chariot mobile sur la majeure partie de son déplacement à l'intérieur du bras pivotant (18) lorsque celui-ci est vertical.

6. Dispositif de manutention selon l'une quelconque des revendications précédentes, caractérisé par le fait que les moyens de réception comprennent un étui de protection (44) muni de berceaux (47) pour le goujon en position horizontale et comportant un fond ajouré (45) permettant le passage des moyens de support (34) du chariot mobile (24) sans autoriser le passage de l'extrémité inférieure du goujon.

7. Dispositif de manutention selon la revendication 6, caractérisé par le fait que l'étui de protection (44) présente un profil en U ouvert sur sa face en regard du côté du bras pivotant (18).

8. Dispositif de manutention selon l'une quelconque des revendications précédentes, caractérisé par le fait qu'il comprend des moyens de sup-

port et de blocage (45a) solidaires du fond de l'étui (44) et coopérant avec des pattes (21) solidaires du bras pivotant, des moyens de verrouillage (43) solidaires des parois latérales de l'étui coopérant avec des crochets (38) montés sur le bras pivotant (18).

9. Dispositif de manutention selon l'une quelconque des revendications précédentes, caractérisé par le fait que l'ensemble du dispositif peut se déplacer le long d'au moins un rail de guidage pour recevoir un goujon suspendu.

10. Installation de manutention de goujons, caractérisée par le fait qu'elle comprend un dispositif de manutention selon l'une quelconque des revendications précédentes associé à un chariot de transport des étuis.

11. Procédé de manutention de goujons (36) par déplacement vertical du goujon et pivotement jusqu'en position horizontale et vice versa, caractérisé par le fait qu'il consiste à utiliser pour chaque goujon un étui protecteur (44) de réception ouvert latéralement dont le fond (45) peut supporter le goujon en position verticale, que l'on procède ensuite au mouvement de descente verticale du goujon à l'intérieur de son étui de réception jusqu'à ce que la partie inférieure du goujon vienne en contact avec la paroi de fond de l'étui puis que l'on procède au mouvement de pivotement jusqu'en position horizontale de l'étui contenant le goujon afin de déposer le goujon et que l'on procède aux opérations inverses pour la reprise d'un goujon.

**Patentansprüche**

1. Vorrichtung zum Handhaben langgestreckter großer Gegenstände, wie Stifte (36), die die Verschiebung des Stifts in senkrechter Richtung und seine Kippen in die Waagrechte und umgekehrt ermöglicht, dadurch gekennzeichnet, daß sie enthält: Einen Schwenkarm (18), der um eine am unteren Ende des Schwenkarms angeordnete feste Achse gekippt werden kann und für einen beweglichen Wagen (24) als Führung dient, der sich entlang des genannten Schwenkarms bewegt und mit Auflagemitteln (34) für den unteren Teil des Stifts (36) versehen ist, wenigstens ein Seil (17), dessen ein Ende am beweglichen Wagen (24) befestigt ist und dessen anderes Ende mit einer festen Winde (11) zusammenwirkt wobei das Seil wenigstens über ein festes Element und ferner über eine auf dem Schwenkarm (18) über der genannten festen Achse (19) montierte lose Rolle (37) läuft, sowie Aufnahmemittel (44) für den Stift (36), die lösbar am Schwenkarm (18) befestigt sind, wobei das Gewicht des beweglichen Wagens (24) so ist, daß die auf die bewegliche Rolle (37) wirkende Belastung hinreichend groß ist, um den Schwenkarm (18) in die senkrechte Stellung zu bringen und zu halten.

2. Vorrichtung zum Handhaben gemäß Anspruch 1, dadurch gekennzeichnet, daß die Schwenkbewegungen des Arms (18) und die Verschiebung des Wagens (24) durch ein einziges Seil (17), das sich auf eine Winde (11) aufwickelt, koordiniert werden.

3. Vorrichtung zum Handhaben gemäß Anspruch 1 oder 2, dadurch gekennzeichnet, daß das am beweglichen Wagen (24) befestigte Ende des Seils (17) im wesentlichen in der senkrechten Verschiebungsachse des Wagens läuft und daß das Seil (17) dann über eine Gruppe loser Rollen (13 bis 16) läuft bevor es auf die loser Rolle (37), die fest mit dem Arm (18) verbunden ist und an der Seitenwand dieses letzteren montiert ist, läuft.

4. Vorrichtung zum Handhaben gemäß einem beliebigen der vorstehenden Ansprüche, dadurch gekennzeichnet, daß der Schwenkarm (18) eine längliche Konstruktion umfaßt, die mit Laufbahnen für den innerhalb der genannten Konstruktion montierten beweglichen Wagen (24) versehen ist, wobei Anschläge vorgesehen sind, um die Verschiebung des Wagens im Inneren der genannten Konstruktion zu begrenzen.

5. Vorrichtung zum Handhaben gemäß einem beliebigen der vorstehenden Ansprüche, dadurch gekennzeichnet, daß eine feste Sicherheitsführungsschiene (29) mit unten offenem Ende mit dem beweglichen Wagen über den größten Teil seiner Bewegung im Inneren des Schwenkarms (18) zusammenwirkt sobald dieser senkrecht steht.

6. Vorrichtung zum Handhaben gemäß einem beliebigen der vorstehenden Ansprüche, dadurch gekennzeichnet, daß die Aufnahmemittel eine Schutzhülse (44), versehen mit Trägern (47), für den Stift in waagrechter Stellung und mit einem gelochten Boden (45) umfassen, der das Durchfahren der Auflagemittel (34) des beweglichen Wagens (24) ermöglicht ohne das untere Ende des Stifts durchzulassen.

7. Vorrichtung zum Handhaben gemäß Anspruch 6, dadurch gekennzeichnet, daß die Schutzhülse (44) ein an der Fläche zum Schwenkarm (18) hin offenes U-Profil aufweist.

8. Vorrichtung zum Handhaben gemäß einem beliebigen der vorstehenden Ansprüche, dadurch gekennzeichnet, daß sie mit dem Boden der Hülse (44) fest verbundene Auflagemittel und Feststellmittel (45), die mit am Schwenkarm fest verbundenen Klauen (21) zusammenwirken, und mit den Seitenwänden der Hülse fest verbundene Verriegelungsmittel (43), die mit am Schwenkarm (18) montierten Haken (38) zusammenwirken, enthält.

9. Vorrichtung zum Handhaben gemäß einem beliebigen der vorstehenden Ansprüche, dadurch gekennzeichnet, daß sich die gesamte Vorrichtung entlang wenigstens einer Führungsschiene bewegen kann, um einen aufgehängten Stift aufzunehmen.

10. Einrichtung zum Handhaben von Stiften, dadurch gekennzeichnet, daß sie eine Vorrichtung zum Handhaben gemäß einem beliebigen der vorstehenden Ansprüche enthält und an einem Transportwagen für Hülsen befestigt ist.

11. Verfahren zum Handhaben von Stiften (36) durch senkrechte Verschiebung des Stifts und Kippen in die Waagrechte und umgekehrt, dadurch gekennzeichnet, daß es darin besteht, daß für jeden Stift eine seitlich offene Aufnahme-Schutzhülse (44) verwendet wird, deren Boden (45) den Stift in senkrechter Stellung aufnehmen kann, daß man anschließend zum senkrechten Absenken des Stifts im Inneren der Hülse Übergeht bis der untere Teil des Stifts mit der Bodenwand der Hülse in Berührung kommt, und daß man dann zur Kippbewegung der den Stift enthaltenden Hülse in die Waagrechte übergeht um den Stift abzulegen, und man anschließend zur Aufnahme eines neuen Stifts die obigen Arbeitsgänge in umgekehrter Reihenfolge durchführt.

## Claims

1. Apparatus for handling large elongate articles, such as bolts (36), allowing the bolt to be moved vertically and pivoted into a horizontal position, and vice versa, characterised in that it incorporates a pivoting arm (18) capable of tilting about a fixed axle (19), located in the vicinity of the lower end of the arm, and serving for guiding a movable carriage (24) capable of moving along the said arm and equipped with supporting means (34) for the lower portion of the bolt (36), at least one cable (17), one end of which is fastened to the movable carriage (24) and the other end of which interacts with a fixed winch (11), the capable passing via at least one fixed member and also over a loose pulley (37) mounted on the arm (18) above the said fixed axle (19), and means (44) of receiving the bolt (36), these means being attachable removably to the pivoting arm (18), the weight of the movable carriage (24) being such that the force on the loose pulley (37) remains sufficient to bring the arm (18) into a vertical position and maintain it there.

2. Handling apparatus according to Claim 1, characterised in that the pivoting movements of the arm (18) and the displacement movements of the carriage (24) are co-ordinated with one another by means of a single cable (17) winding onto a winch (11).

3. Handling apparatus according to Claims 1 or 2, characterised in that the end of cable (17) fastened to the movable carriage (24) is substantially in the axis of vertical displacement of the carriage, and in that the cable (17) subsequently passes over a set of loose pulleys (13 to 16), before passing over the loose pulley (37) fixed to the arm (18) and mounted on the side wall of the latter.

4. Handling apparatus according to any one of the preceding claims, characterised in that the pivoting arm (18) comprises an elongate structure equipped with guide tracks for the movable carriage (24) mounted inside the said structure, stops being provided to limit the movement of the carriage within the said structure.

5. Handling apparatus according to any one of the preceding claims, characterised in that a fixed safety guide rail (29) with an open lower end interacts with the movable carriage over most of its displacement within the pivoting arm (18) when the latter is vertical.

6. Handling apparatus according to any one of the preceding claims, characterised in that the receiving means comprise a protective cover (44) provided with cradles (47) for the bolt in a horizontal position and possessing a perforated bottom (45) allowing the supporting means (34) for the movable carriage (24) to pass through, without permitting the lower end of the bolt to pass through.

7. Handling apparatus according to Claim 6, characterised in that the protective cover (44) has a profile in the form of an open U on its face located opposite the side of the pivoting arm (18).

8. Handling apparatus according to any one of the preceding claims, characterised in that it incorporates supporting and retaining means (45a) integral with the bottom of the cover (44) and interacting with lugs (21) integral with the pivoting arm, and locking means (43) integral with the side walls of the cover interacting with hooks (38) mounted on the pivoting arm (18).

9. Handling apparatus according to any one of the preceding claims, characterised in that the apparatus as a whole can move along at least one guide rail to receive a suspended bolt.

10. Installation for handling bolts, characterised in that it incorporates a handling apparatus according to any one of the preceding claims, associated with a carriage transporting the covers.

11. Process for handling bolts (36) by means of the vertical movement of the bolt and the pivoting of the bolt into a horizontal position, and vice versa, characterised in that it involves using for each bolt a laterally open protective receiving cover (44), the bottom (45) of which can support the bolt in a vertical position, in that the bolt is subsequently lowered vertically within its receiving cover, until the lower part of the bolt comes into contact with the bottom wall of the cover, and the movement to pivot the cover containing the bolt into a horizontal position is then executed in order to put down the bolt, and in that the operations are carried out in reverse order to pick up a bolt again.

FIG.1

0 051 241

FIG.2

0 051 241

FIG.3

3

0 051 241

FIG.4

4